# EUROPÄISCHE PATENTANMELDUNG

(11) **EP 1 112 969 A1**
(43) Veröffentlichungstag der Anmeldung: **04.07.2001**
(21) Anmeldenummer: 01102506.1
(22) Anmeldetag: 08.11.1994
(51) Int. Cl.: C02F 3/12

(54) **Verfahren zur Steuerung der Atmungsaktivität von Mikroorganismen in einem Belebtschlammprozess bei der Abwasserreinigung**

(30) Priorität: 09.11.1993 DE 4338220
(62) Teilanmeldung aus: 94117617.4
(71) Anmelder: Albert, Alfred, D-63829 Krombach (DE)
(72) Erfinder: Albert, Alfred, D-63829 Krombach (DE)
(74) Vertreter: Patentanwälte Dr. Solf & Zapf

(57) **Zusammenfassung**

Die Anmeldung betrifft Verfahren zur Steuerung der Atmungsaktivität von Mikroorganismen in einem Fermentationsprozeß bei der Abwasserreinigung, insbesondere in einem Belebtschlammprozeß, wobei in Abhängigkeit von der Versorgungsmenge an Nährstoffen für die Mikroorganismen ein Teil der Versorgungsmenge den Mikroorganismen unzugängig gemacht wird, bzw. dem Abbau durch die Mikroorganismen entzogen wird, durch Zugabe von ad- und/oder absorptiv auf die Nährstoffe wirkende Stoffe.

## Beschreibung

Die Erfindung betrifft ein Verfahren zur Steuerung der Atmungsaktivität von Mikroorganismen in einem Fermentationsprozeß bei der Abwasserreinigung, insbesondere in einem Belebtschlammprozeß.

Das Belebtschlammverfahren ist das am weitesten verbreitete Verfahren zur aeroben Abwasserbehandlung häuslicher und industrieller Abwässer.

Bei einer nach dem Belebtschlammverfahren arbeitenden Kläranlage werden die Abwässer meist zunächst über mechanische Reinigungsstufen, wie Rechen, Öl-, Fett- und Sandabscheider, Siebe u.ä. geleitet, um Stoffe mit höherer Teilchengröße abzutrennen.

Die in den Abwässern verbliebenen, größtenteils gelösten Stoffe wrden dann in einer Belebungsanlage, die aus einem belüfteten, homogenen durchmischten Belebungsbecken und einem Sedimentationsbecken (Nachklärbecken) besteht, behandelt.

Im Sedimentationsbecken wird der "Belebtschlamm" von gereinigtem Abwasser getrennt und zum größten Teil in das "Belebungsbecken" zurückgeführt. Überschüssige Mengen dieses Reststoff-, Mikroorganismen- und Wassergemisches werden als "Überschussschlamm" weiteren Stufen der Schlammbehandlung (Biogasanlage, Entwässerung, Trocknung, Verbrennung u.ä.) zugeführt.

Das Ziel der Abwasserreinigung ist die Entfernung möglichst aller Inhaltsstoffe, insbesondere jedoch von Kohlenstoff-, Stickstoff- und Phosphorverbindungen.

In einer Belebungsanlage werden im wesentlichen folgende mikrobiologischen Umsetzungen bewirkt:

| | Mineralisation | Nitrifikation | Denitrifikation |
|---|---|---|---|
| beteiligte | | | |
| Mikroorganismen | Saprophyten | Nitritbildner | zahlreiche |
| | | Nitratbildner | Saprophyten |
| N-Verbindung als | Stickstoff- | Stickstoff- | Stickstoff- |
| | und | und | und |
| | Energie-Quelle | Energie-Quelle | Sauerstoff- |
| | | | quelle |
| C-Versorgung | organische | anorgische | organische |
| | C-Verbindungen | C-Verbindungen | C-Verbindun- |
| | | | gen |
| | | | (Energie- |
| | | | quelle) |
| O₂-Ansprüche | aerob | aerob | anoxisch |
| | | (4, 3mgO₂/ | |
| | | mgNH₄) | |
| Stoffwechsel- | | | |
| produkte | H₂O; CO₂; | H₂O;H+ | H₂O;N₂;CO₂; |
| | NH₄;PO₄; | NO₃;CO₂; | PO₄; |
| pH | steigt | fällt | steigt |

Für den Betrieb von Belebungsanlagen ist neben der Belüftungszeit und der BSB₅-Raumbelastung insbesondere die Schlammbelastung wichtig.

Die Schlammbelastung ist definiert als das Verhältnis der täglichen BSB₅-Raumbelastung zu der im Lüftungsbecken vorhandenen Belebtschlammenge, also:

Schlammbelastung = kg BSB₅ pro Tag / kg Trockensubstanz des Belebtschlammes.

Eine Vollreinigung läßt sich erreichen, wenn die Schlammbelastung kleiner ist als täglich 0,3 kg BSB₅ / kg Trockensubstanz des Belebtschlammes. Bei einer größeren Belastung erhält man nur noch eine Teilreinigung.

Insbesondere bei hohen Belastungen der Belebungsanlagen durch eine hohe Versorgungsmenge an Nährstoffen tritt eine zügellose Vermehrung schnellwachsender Organismen auf. Diese Organismen verwenden nur einen geringen Anteil Kohlenstoff-, Stickstoff- und Phosphorverbindungen zum Zellsubstanzaufbau, den weitaus größeren Anteil (ca. 80%) wandeln sie zu Kohlendioxid (Carbonat-, Bicarbonationen), Ammonium- und Phosphationen um.

Andererseits beginnt bei einer täglichen Belastung < 0,3 kg BSB₅ / kg Trockensubstanz des Belebtschlammes eine "Mineralisierung", die im Sinne einer Autolyse (Selbstauflösung) der Mikroorganismen aus der Zellsubstanz des Belebtschlammes ebenfalls die unerwünschten Stoffwechselprodukte NH₄, PO₄ anreichern und gleichzeitig die dringend zur "Denitrifikation" benötigten energiereichen Kohlenstoffverbindungen zu CO₂ mineralisieren.

Es ergeben sich für das Belebtschlammverfahren folgende Nachteile:
1. Energiereiche C-N-P-Verbindungen werden mit Energie (Sauerstoffeintrag) oxidiert und spalten Ammoniak, Kohlendioxid und Phosphate ab, die mit hohem Aufwand eliminiert werden müssen.
2. Der Gehalt an "Biomasse" (aktiven Mikroorganismen) im Belebtschlamm wird reduziert, die Schlammbelastung steigt und die Absetzeigenschaften verschlechtern sich.
3. Die aufwendige Oxidation energiereicher Substanzen führt zu verminderter CH₄-Produktion bei der anaeroben Biogaserzeugung im Faulturm.

In der PCT-Anmeldung mit der internationalen Veröffentlichungs-Nr. WO 93/08922 ist ein Verfahren beschrieben zur Regulierung und/oder zum Abbau von unerwünschten Viskositäts- und CSB-Werten in Lackkoagulationsabwässern, die bei der technischen Verarbeitung von Spritzlacken - beispielsweise bei der Metallackierung in der Automobilindustrie - anfallen.

Dabei wird dem Lackkoagulationsabwasser ein Adsorptionsmittel zugegeben und ein Lackschlamm ausgefällt.

Die in den wässrigen Systemen enthaltenen Mikroorganismen führen dabei mit wachsender Populationszahl zu einer Erhöhung der Viskosität des wäßrigen Systems durch mikrobiell produzierte Polysaccharide, den sogenannten Bioschleim. Bei Erreichen einer bestimmten Zelldichte erfolgt innerhalb weniger Stunden eine hohe Schleimproduktion und im Anschluß daran bleibt die Viskosität auf hohem Niveau über längere Zeit konstant.

Bei dem in dieser Druckschrift beschriebenen Verfahren wird nun der Gehalt an mikrobiell verwertbarem Stickstoff (N) und Phosphor (P) im Lackkoagulationswasser - auch als "limitierende Nahrungsquellen" bezeichnet - in einem solchen Ausmaß erhöht und aufeinander abgestimmt, daß die Bildung von viskositätssteigernden Schleimstoffen zurückgedrängt und/oder bereits gebildete Schleimstoffanteile bakteriell abgebaut bzw. verzehrt werden.

Hier wird also im Gegensatz zum bisher bekannten Stand der Technik, bei dem das Mikroorganismenwachstum durch Einsatz von Biociden bekämpft wurde, durch gezielten Einsatz zweier limitierender Nahrungsquellen umgekehrt das Mikroorganismenwachstum so gefördert, dass die oben genannten Ergebnisse erhalten werden.

Als N-Lieferanten werden dabei leicht wasserlösliche anorganische Salze und/oder ausgewählte wasserlösliche Stickstoffverbindungen zugesetzt, insbesondere Harnstoff oder auch Aminocarbonsäuren, wie beispielsweise Glutaminsäure, wenn N-Lieferanten mit verzögerter Freisetzung des Stickstoffs gewünscht werden.

Der vorliegenden Erfindung liegt die Aufgabe zugrunde, für ein Belebtschlammverfahren bei der Abwasserreinigung ein Verfahren anzugeben, mit dem auch bei einer in Abhängigkeit von der Tageszeit stark wechselnden bzw. stark ansteigenden Versorgungsmenge an Nährstoffen eine zügellose Population der Mikroorganismen unterbunden und mit dem ein gleichbleibender Abbau einer plötzlich auftretenden sehr hohen Versorgungsmenge an Nährstoffen ermöglicht wird.

Diese Aufgabe wird durch das im Anspruch 1 angegeben Verfahren gelöst.

Die Unteransprüche 2 bis 6 beschreiben vorteilhafte Ausführungsformen des Verfahrens nach Anspruch 1.

Gegenstand der Erfindung ist daher ein Verfahren zur Steuerung der Atmungsaktivität von Mikroorganismen in einem Fermentationsprozeß bei der Abwasserreinigung, insbesondere in einem Belebtschlammprozeß, dadurch gekennzeichnet, dass in Abhängigkeit von der Versorgungsmenge an Nährstoffen für die Mikroorganismen ein Teil der Versorgungsmenge den Mikroorganismen unzugängig gemacht wird, bzw. dem Abbau durch die Mikroorganismen entzogen wird, durch Zugabe von ad- und/oder absorptiv auf die Nährstoffe wirkende Stoffe.

Als ad- und/oder absorptiv auf die Nährstoffe wirkende Stoffe werden vorteilhaft feinteilige SiO₂-Derivate, hydrophobe- und/oder hydrophile Aktivkohle und Metallsalze ausgewählt.

Bei einer weiteren vorteilhaften Ausführungsform werden zusätzlich Enzym-inhibierend wirkende Stoffe, ausgewählt aus organischen tertiären und quadronären Stickstoffverbindungen, mit Ausnahme von Cholinderivaten, zugegeben.

Für das erfindungsgemäße Verfahren lassen sich bekannte Polymere für eine Ad- bzw. Absorptionsreaktion einsetzen.

Beispiele für solche Polymere sind alle wasserlöslichen handelsüblichen Polymere, insbesondere alle Homo- und/oder Copolymerisate der Acrylsäure und ihrer Derivate.

Obwohl nicht bekannt ist, auf welche Weise der Zusatz von ad- und/oder absorptiv auf die Nährstoffe wirkenden Stoffe eine Steuerung des Abbaus einer plötzlich stark ansteigenden Versorgungsmenge an Nährstoffen auf einen längeren Zeitraum verteilt bewirkt, wird angenommen, dass die Mikroorganismen zunächst nach der Maxime des kleinsten Widerstands die von den ad- und/oder absorptiv auf die Nährstoffe wirkenden Stoffe nicht gebundenen Nährstoffanteile abbauen, und der für die Mikroorganismen zunächst "blockierte" restliche Nährstoffgehalt erst nach Aufbrechen der entsprechenden Bindungen über einen längeren Zeitraum hinweg wieder freigegeben und so abgebaut wird. (Siehe Phase 1 des Beispiels).

Durch die erfindungsgemäßen Maßnahmen wird die Nitratbildung reduziert, so dass die Denitrifizierung ohne weiteres sichergestellt ist. Die Aktivität der Mikroorganismen kann durch Messen des Sauerstoffbedarfs in Abhängigkeit von der Nährstoffmenge ermittelt werden (mg O₂/g Trockensubstanz und Minute).

Mit dem erfindungsgemäßen Verfahren zur Steuerung der Atmungsaktivität von Mikroorganismen in einem Fermentationsprozeß, insbesondere einem Belebtschlammprozeß, bei dem eine Autolyse, d.h. Ammonifikation und Desaminierung, weitgehend zum Stillstand gebracht wird, ist es möglich, bei einer nach dem Belebtschlammverfahren betriebenen Kläranlage die Belebungsbecken mit einem 10-fach kleineren Volumen auszustatten als im Stand der Technik, was zu einer erheblichen Verminderung der Investitionen führen wird.

Ebenso wird durch die verminderte Autolyse eine wesentliche Energieeinsparung bei der Belüftung infolge eines niedrigeren Sauerstoffbedarfes erzielt bei gleichzeitig erhöhter Produktion von Methan im Biogas, falls eine "Faulung" zur Schlammbehandlung nachgeschaltet ist und einer damit verbundenen erhöhten Energiegewinnung.

So wird bei einem weiteren vorteilhaften Verfahren zur Entwicklung einer bestimmten Biozönose eine bestimmte Bedingung für den Selektionsdruck durch Wahl eines bestimmten Verhältnisses von zugeführter Sauerstoffmenge zu Mikroorganismenmenge und/oder Nährstoffmenge im Bereich von 50 bis 2 000 kg pro Tonne chemischem Sauerstoffbedarf (CSB) eingehalten. Durch Wahl dieses bestimmten Verhältnisses werden die im Stand der Technik entstehenden Schlammmengen (Trockenstoff) pro Tonne CSB deutlich verringert, und es läßt sich eine bessere Entwässerbarkeit der Belebtschlämme erzielen. Weiterhin zeigen auf solche Weise gebildete Belebtschlämme mit niedrigen Sauerstoffgehalten höhere Umwandlungsraten in Biogasanlagen, und das entstehende Biogas besitzt einen geringeren CO₂-Anteil im Methan und führt somit zu Vorteilen bei Verbrennungsvorgängen im Gasmotor oder in Heizungen.

Bei einem weiteren vorteilhaften Verfahren wird zur Entwicklung einer bestimmten Biozönose eine bestimmte Bedingung für den Selektionsdruck durch Wahl eines bestimmten Verhältnisses von zugeführter Sauerstoffmenge zu entwickelter Kohlendioxidmenge und/oder Nährstoffmenge im Bereich von 50 bis 2 000 kg pro Tonne chemischem Sauerstoffbedarf (CSB) eingehalten. Dadurch läßt sich der Sauerstoffverbrauch pro Tonne CSB sowie der Sauerstoffanteil für die Kohlendioxidentwicklung und die entstehende Trockenstoffmenge pro Tonne CSB gegenüber dem Stand der Technik deutlich verringern.

Im folgenden wird die Erfindung anhand von Beispielen und einer Zeichnung näher erläutert, in der zeigen:
- Figur 1: die Abhängigkeit der Lüfterleistung von der Zeit beim Betrieb einer Kläranlage für die Phasen 1, 2 und 3;
- Figur 2: die Abhängigkeit der chemisch oxidierbaren Stoffe CSB und BSB₅ von der Zeit während der Phasen 1, 2 und 3 beim Betrieb einer Kläranlage;
- Figur 3: die Abhängigkeit des Phosphorgehalts (mg/l) von der Zeit während der Phasen 1, 2 und 3 beim Betrieb einer Kläranlage;
- Figur 4: die Abhängigkeit der Zersetzungsprodukte (mg/1) während der Phasen 1, 2 und 3 beim Betrieb einer Kläranlage.

Die Vorteile, die mit dem erfindungsgemäßen Verfahren erzielbar sind, ergeben sich aus folgendem Beispiel 1:

### Beispiel 1:

In einer Kläranlage müssen täglich bei Trockenwetterzufluß etwa 2500 cbm Abwasser gereinigt werden. Der chemische Sauerstoffbedarf (CSB) wird mit durchschnittlich 600 mg/l gemessen, der biologische Sauerstoffbedarf innerhalb 5 Tagen (BSB₅) wird mit 300 mg/l durchschnittlich ermittelt. Diese Werte unterliegen in dem beobachteten Zeitraum über die Wochentage gleichen Schwankungen.

Daraus errechnet sich eine Belastung von 2 500 x 0,3 = 750 (kg BSB₅ / Tag).

Die Belüftungsbecken bestehen aus einer Kaskade von 4 Becken mit je 620 cbm genutztem Volumen, hieraus errechnet sich eine
- Raumbelastung von: 750 : 2 480 = 0,302 (kg BSB₅/cbm·d)
und eine
- Schlammbelastung bei 4gTS/l von: 750 : 9 920 = 0,076 (kg BSB₅/kgTS·d)

Die Kläranlage wurde nach den allgemein anerkannten Regeln betrieben, mit der Folge ungesicherter Reinigungsleistungen, insbesondere die Nitrat-Stickstoffwerte (NO₃-N) waren nicht gesichert einzuhalten.

Insbesondere auch nicht durch Anwendung der Regeln der ATV-Richtlinie A131, die speziell für die Stickstoffentfernung erarbeitet wurden. (Siehe auch: Taschenbuch der Stadtentwässerung von Karl und Klaus R. Imhoff, 28. Auflage, Seite 228ff, R. Oldenbourg Verlag München Wien 1993.)

Zur Sicherstellung der Werte wurden Sollwerte für die Sauerstoffkonzentrationen im Becken 1 der Kaskade von 0,4 mg/l und im Becken 4 der Kaskade von 1,5 mg/l vorgegeben. Die Sollwerte wurden im "Normalbetrieb" nicht erreicht.

4 Gebläse versorgen die "Belebungsbecken" bei 100% Leistung mit einer Luftmenge von 2 500 cbm/h, d.h. 60.000 cbm/Tag.

Anwendung des erfindungsgemäßen Verfahrens:

Direkt an die Luftmenge wird in linearer Abhängigkeit die Chemikaliendosierung (Produkt mit der Handelsbezeichnung ENTEC 118) gekoppelt. Bei 100% Lüfterleistung werden 10 kg/h ENTEC 118 dosiert.

Das Produkt enthält 8,5 % Al+++ in Form von Aluminiumhydroxid-chlorid und 0,7 % enzymwirksamer Zusätze. Das Al-Derivat dient zur PO₄-P-Fällung (Fällprodukt AlPO₄), zur Bindung von Nährstoffen und zur "Bewuchsfläche für die Mikroorganismen".

### Phase 1:

### Betrieb:

Der Beginn der Phase 1 zeigt noch die Auswirkungen der übermäßigen Autolyse. Trotz einer Lüfterleistung von 100 bis 90 % vom 1. Juli bis 18. Juli konnte der Sauerstoffsollwert weder im Becken 1 noch im Becken 4 erreicht werden. Gleichzeitig zur 100%-igen Lüfterleistung wurden täglich 240 kg ENTEC 118 dosiert.

Im System befindet sich eine Trockenmasse von (4 x 620 x 4) 9 920 kg; aus dem System werden täglich durch "Überschußschlamm"-entnahme 750 kg entfernt. (Daraus errechnet sich ein "Schlammalter" von 9 920 : 750 = 13,22 Tagen)

Als Richtwert dient dieses "Schlammalter" für die Zeit bis zur Einstellung der "Wirksubstanzkonzentration" im Trockenstoff von 240 x 0,085 : 750 = 0,027 (kg/kg TS).

Der Faktor 0,085 dient zur Umrechnung von Produktmenge auf Wirksubstanz, da in der Handelsware 8,5 % enthalten sind.

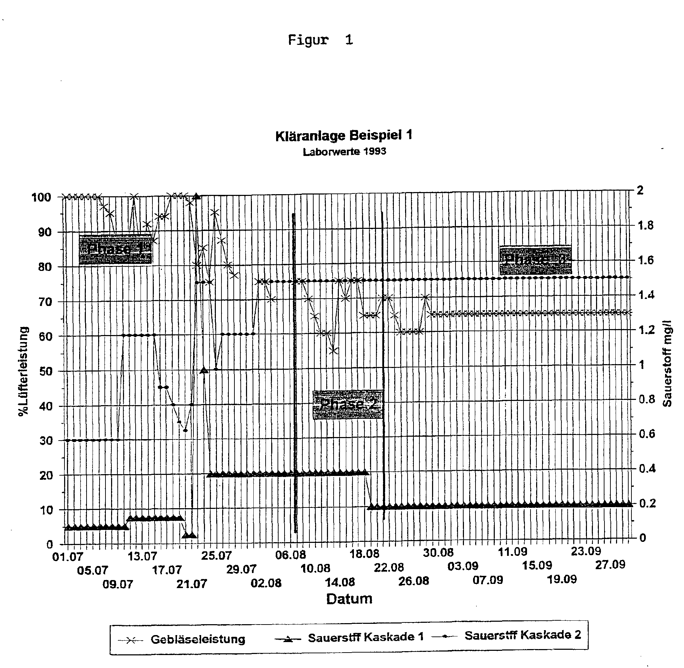

In Figur 1 ist die Auswirkung dargestellt, die Sauerstoffkonzentration konnte innerhalb von 20 Tagen auf die Sollwerte erhöht werden. Die nötige Lüfterleistung pendelte sich bei 70 % ein.

### Resultate:

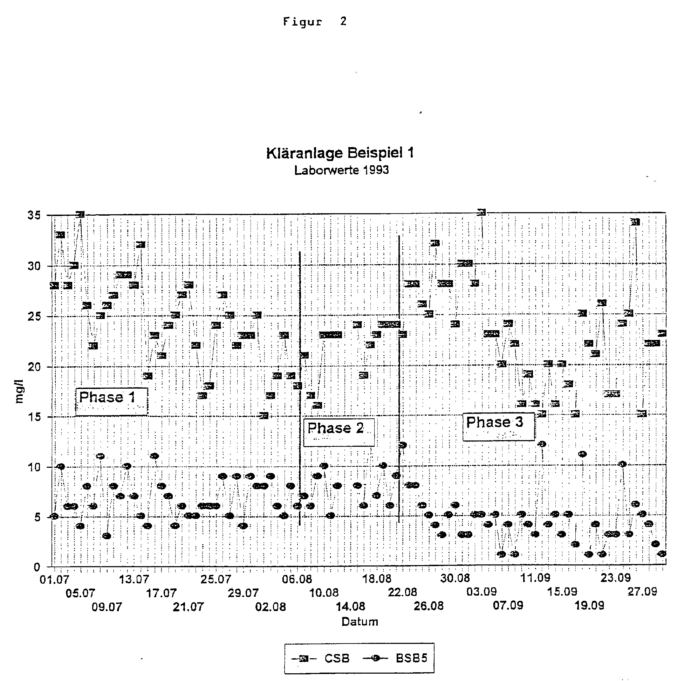

- Figur 2:: Die chemisch oxidierbaren Stoffe nehmen ab, die Schwankungsbreite der biologisch oxidierbaren Stoffe verringert sich von vorher 4-11 mg/l auf 4-8 mg/l. Die Erklärung kann in der verminderten Zersetzung gefunden werden, d.h. ein höherer CSB-Anteil aus aufgespaltenen Mikroorganismenzellen (Autolyse) ist biologisch nicht mehr oxidierbar.

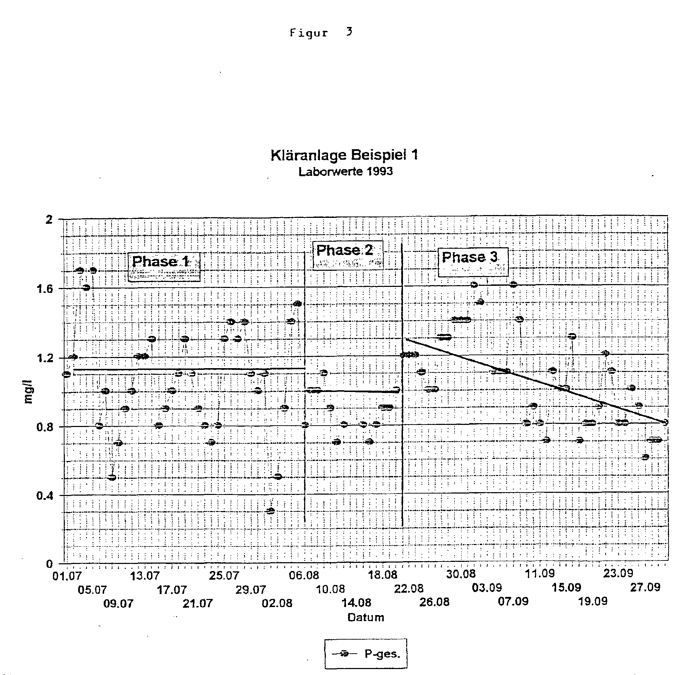

- Figur 3:: Der Phosphorgehalt schwankt zwischen 0,4 und 1,6 mg/l; aufgrund der hohen Chemikaliendosierung nicht erklärbar; wird aber erklärbar durch die Vorgänge bei der "Mineralisation" (= PO₄-P-Produktion aus vorher biologisch gebundenem P).

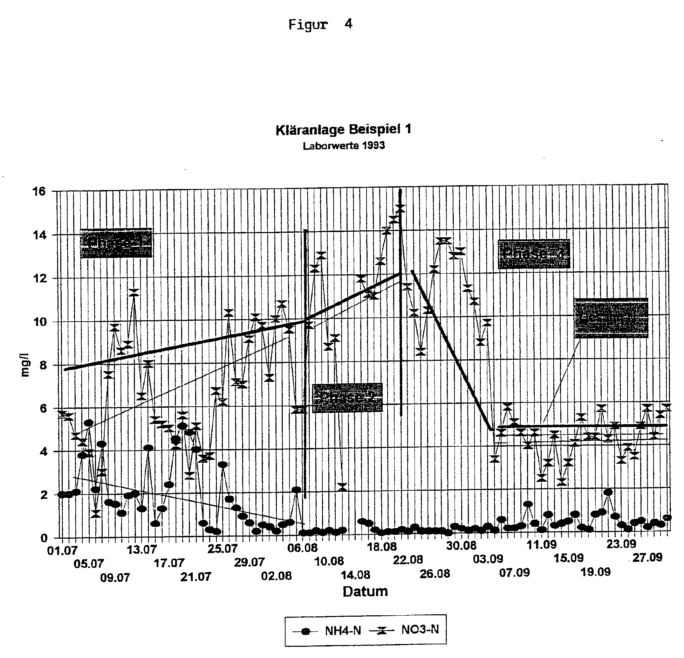

- Figur 4:: Die Zersetzungsprodukte führen zu NH₃-N und NO₃-N; NH₃-N wird zu NO₃-N oxidiert (Energieaufwand für Belüftung) .

### Phase 2:

### Betrieb:

Die Sollwerte für die Sauerstoffwerte in Becken 1 und Becken 4 werden erreicht, die nötige zuzuführende Luftmenge reduziert sich auf 70 % der Maximalleistung (von 60.000 cbm/d auf 42.000 cbm/d), die Chemikalienmenge wird durch die direkt gekoppelte Steuerung auf 168 kg/d reduziert.

Einstellung der Wirksubstanz auf 168 x 0,085 : 750 = 0,019 (kg/kg TS in der Belebung).

Resultate:
- Figur 2:: CSB und BSB₅-Verhältnis nähert sich dem Wert des Zulaufes (2:1), eine Erklärung ist darin zu sehen, daß die "Zellgifte" aus der Autolyse fehlen.

Durch die bessere Sauerstoffversorgung in Becken 1 sind geringe Zersetzungsvorgänge auch weiterhin nicht auszuschließen.
- Figur 3:: Die verringerte Autolyse führt zu verringerter PO₄-Produktion, deshalb ist trotz verringerter Chemikalienzugabe die P-Gesamtkonzentration auf 0,7-1,1 mg/l gefallen.
- Figur 4:: NH₄-N ist vollständig zu NO₃-N oxidiert, aus der Autolyse entstehender NH₃-N wird ebenfalls sofort zu NO₃-N oxidiert, weshalb die NH₄-N-Konzentration ständig < 0,5 mg/l bleibt. Die Autolyse führt jedoch noch zu einem NO₃-N-Wert von 10-15 mg/l.

### Phase 3:

### Betrieb:

In Becken 1 wird der Sollwert für die Sauerstoffkonzentration auf 0,2 mg/l gesenkt.
Dadurch reduziert sich die nötige Luftmenge von 70 % aus Phase 2 auf 65 % in Phase 3.
Die Menge von 39.000 cbm/d Luft bewirkt eine Chemikaliendosierung von 156 kg/d.
Dadurch stellt sich eine Wirkstoffkonzentration von 156 x 0,085 : 750 = 0,0177 (kg/kg TS) ein.

### Resultate:

- Figur 2:: Durch die erneute Unterbindung von Zersetzungsvorgängen verringert sich bei gleichbleibender Belastung der Kläranlage der CSB- und BSB₅-Wert.
- Figur 3:: Durch die Reduzierung der Chemikalienmenge erhöht sich zunächst der Gesamt-P-Wert von ca. 1,0 mg/l auf ca. 1,4 mg/1. Nach dem Adaptionszeitraum (Schlammalter) von 13 Tagen werden jedoch die Auswirkungen der geringeren Zersetzungsrate wirksam, d.h. die Gesamt-P-Werte fallen unter 0,8 mg/l auf Werte zwischen 0,6-0,8 mg/l.
- Figur 4:: Die Stickstoffentfernung ist gesichert möglich. Durch die verminderte Autolyse fällt der "Gesamtstickstoff" von ca. 12 mg/l auf 5 mg/l; bei gesicherter Einhaltung der geforderten NH₄-N-Konzentration.

Dieses Beispiel und viele Erfahrungen bei Fermentationen zeigen, daß die unkontrollierte Enzymproduktion bei schwankenden Substratkonzentrationen zu Zersetzungserscheinungen führt, die durch erhöhten Sauerstoffbedarf zu Endprodukten

(NH₃- > NO₃; CO₂; PO₄)

führt, die ja eigentlich eliminiert werden sollen.

Durch gezielte Reduktion der Autolyse ist eine Verminderung des Energieaufwandes und des Chemikalieneinsatzes in bedeutendem Ausmaß möglich.

Die Zielsetzung der Abwasserreinigung ist eine gesicherte Kohlenstoff(C)-, Stickstoff(N)- und Phosphor(P)-Entfernung aus dem Abwasser, das in Gewässer eingeleitet wird.

Das Beispiel hat gezeigt, daß die nötige Betriebssicherheit hergestellt wird und die Resultate den zur Zeit für Großkläranlagen geforderten Werten für CSB < 40 mg/l; Gesamt-P < 1 mg/l; Gesamt-N < 10 mg/l gerecht werden.

Insbesondere für Anlagen, die in kritische Binnengewässer (Bodensee u.a.) einleiten, werden weitergehende Forderungen (z.B. < 0,3 mg/l Gesamt-P) dazu führen, daß solche Regelstrategien unumgänglich sind.

### Beispiel 2:

Eine Kläranlage einer Stadt wird mit ca. 100 000 Einwohnergleichwerten belastet, d.h. die CBS-Fracht in die belüfteten Belebungsbecken beträgt 10 t CSB/Tag.

In diesen Belüftungsbecken mit einem Volumen von 2 x 2 225 = 4 450 cbm sind
2 x 18 x 15 = 540 kW für Sauerstoffeintrag (Belüfter der Fa. Fuchs/Mayen) installiert.

Nach dem Stand der Technik werden in Fällungsbecken Calciumhydroxid und Eisen(II)-sulfat dosiert. Damit ist es möglich, den belüfteten Belebungsbecken ca. 3 - 3,5 t CSB/Tag zuzuführen. Bei Belastungen von mehr als 200 kg CSB/h sind die 2 x 18 = 36 Belüfter überlastet (maximal 5 t CSB/Tag).

Die Biomasse zeigt als Maß für die Absetzeigenschaften einen Schlammindex, d.h. ein Schlammvolumen nach 30 Minuten von 150 bis 250 ml/g auf. Die erzielbare Konzentration im Sediment des Absetzbeckens schwankt zwischen 0,5 und 1,0 % je nach hydraulischer Belastung der Anlage. Maximal kann die Anlage aufgrund der Absetzeigenschaften der Biomasse mit 1 000 cbm Abwasser/h belastet werden. Bei höherer Belastung wird die Biomasse in solch hohem Ausmaß ausgeschwemmt, daß die gesetzlich vorgeschriebenen Höchstwerte nicht mehr eingehalten werden können.

Die Sauerstoffmenge wird über die Sauerstoffkonzentration in den belüfteten Belebungsbecken gesteuert und geregelt, die Anzahl der benötigten Belüfter schwankt zwischen 2 x 10 bis 14, d.h. zwischen 20 und 28 Belüftern. Die spezifische Sauerstoffmenge wird in Tests mit 0,9 kg Sauerstoff/kWh ermittelt, daraus errechnet sich ein Sauerstoffeintrag bei 20 Belüftern und 7 200 kWh von 7 200 x 0,9 = 6 480 kg/d bzw. bei 28 Belüftern und 10 080 kWh von 10 080 x 0,9 = 9 072 kg/d.

Die spezifischen Sauerstoffmengen errechnen sich bei
... 3 t CSB/Tag zu 2 160 und 3024 kg Sauerstoff/t CSB, der zugehörige spezifische Energieverbrauch für den Sauerstoffeintrag liegt bei 2 400 kWh/t CSB bzw. 3 360 kWh/t CSB;
... 3,5 t CSB/Tag zu 1 851 und 2 592 kg Sauerstoff/t CSB, der zugehörige spezifische Energieverbrauch für den Sauerstoffeintrag liegt bei 2 057 kWh/t CSB bzw. 2 880 kWH/t CSB.

Aus dem System werden 2,2 bis 2,4 t TS/Tag entfernt.

Die spezifische Trockenstoffmenge ist

| | |
|---|---|
| bei 3 t CSB/Tag | 733 bzw. 800 kg/t CSB |
| bei 3,5 t CSB/Tag | 629 bzw. 685 kg/t CSB. |

Der Gasanfall in der Biogasanlage, in der der gesamte in der Kläranlage anfallende Schlamm behandelt wird, betrug durchschnittlich 3 000 cbm/Tag mit 64 Vol% Methan und 36 Vol% CO₂.

Nach dem Verfahren gemäß Anspruch 5 werden in den Fällungsbecken kein Calciumhydroxid und Eisen(II)-sulfat dosiert. Damit werden den belüfteten Belebungsbecken
ca. 8 bis 10 t CSB/Tag zugeführt.

Die Biomasse zeigt nach 8 Wochen als Maß für die Absetzeigenschaften einen Schlammindex, d.h. ein Schlammvolumen nach 30 Minuten von 50 bis 70 ml/g auf. Die erzielbare Konzentration im Sediment des Absetzbeckens schwankt zwischen 1,0 und 1,5 %, je nach hydraulischer Belastung der Anlage. Maximal kann die Anlage aufgrund der anfallenden maximalen Abwassermenge mit 3 000 cbm Abwasser/h belastet werden, selbst in diesem Extremfall können die gesetzlich vorgeschriebenen Höchstwerte eingehalten werden.

Die Sauerstoffmenge wird über die Sauerstoff- und Mikroorganismenkonzentration in den belüfteten Belebungsbecken gesteuert und geregelt, die Anzahl der benötigten Belüfter schwankt zwischen 2 x 6 bis 8, d.h. zwischen 12 und 16 Belüftern. Die spezifische Sauerstoffmenge wird in Tests mit 0,9 kg Sauerstoff/kWh ermittelt, daraus errechnet sich ein Sauerstoffeintrag bei 12 Belüftern und 4 320 kWh von 4 320 x 0,9 = 3 888 kg/d bzw. bei 16 Belüftern und 5 760 kWh von 5 184 x 0,9 = 4 665 kg/d.

Die spezifischen Sauerstoffmengen errechnen sich bei
... 8 t CSB/Tag zu 486 und 583 kg Sauerstoff/t CSB, der zugehörige spezifische Energieverbrauch für den Sauerstoffeintrag liegt bei 540 kWh/t CSB bzw. 648 kWh/t CSB;
... 10 t CSB/Tag zu 389 und 467 kg Sauerstoff/t CSB, der zugehörige spezifische Energieverbrauch für den Sauerstoffeintrag liegt bei 432 kWh/t CSB bzw. 467 kWh/t CSB.

Aus dem System werden 1,8 bis 2,0 t TS/Tag entfernt.

Die spezifische Trockenstoffmenge beträgt

| | |
|---|---|
| ... bei 8 t CSB/Tag | 225 bzw. 250 kg/t CSB |
| ... bei 10 t CSB/Tag | 180 bzw. 200 kg/t CSB. |

Der Gasanfall in der Biogasanlage, in der der gesamte in der Kläranlage anfallende Schlamm behandelt wird, beträgt durchschnittlich 4 000 cbm/Tag mit 68 Vol% Methan und 32 Vol% CO₂.

Die Steuerung und Regelung beim Verfahren gemäß Anspruch 5 erfolgt durch Variation der Dosiermenge des Produktes ENTEC 118/S (Verbrauch 150 kg/t CSB) in Abhängigkeit von der zugeführten Luftmenge, sowie der Variation der Mikroorganismenmenge in den belüfteten Belebungsbecken durch Steuerung des Rücklaufschlammverhältnisses (Abwasser: Rücklaufschlamm).

Überraschenderweise ist es für die Eigenschaften einer Mikroorganismenzusammensetzung von überragender Bedeutung, welche Sauerstoffmenge auf biologischem Wege in Form von chemischen Verbindungen in der Mikroorganismenmasse aufgenommen wird. Diese Sauerstoffmenge wird nach dem Stand der Technik ungeregelt und zufallsbedingt nach der erfindungsgemäßen Lehre geregelt in engen Grenzen eingestellt.

### Beispiel 3:

Der Anteil des Sauerstoffs, der in Kohlendioxid umgewandelt wird, ist im Verhältnis zum "eingebauten" Sauerstoff durch Luftmengenmessungen der zugeführten und der abgeführten Luft sowie der Sauerstoff- und Kohlendioxidgehalte zu ermitteln (On-line-Meßgeräte). (Der Sauerstoffanteil in der Biomasse wird nach dem Stand der Technik kaum beachtet.)

Bei einem Verfahren gemäß Anspruch 6 gelingt die Einstellung des Selektionsdruckes einer Biozönose zur Entwicklung einer Population, die möglichst wenig Kohlenstoffquellen (Energieträger) mittels Energie (Lufteintrag) zu Kohlendioxid umwandelt, durch Variation der enzyminhibierenden Stoffe. Hierdurch wird der Sauerstoffverbrauch pro Tonne CSB, der Sauerstoffanteil für die Kohlendioxidentwicklung und die Trockenstoffmenge pro Tonne CSB deutlich verringert, wie im folgenden gezeigt wird.

Bei einem Verfahren im Stand der Technik wird für die Kläranlage einer Stadt, welche mit leicht abbaubaren Molkereiabwässern belastet ist, ein Verbrauch von 3 000 kg Sauerstoff/t CSB durch die Mikroorganismen und eine aus dem System entfernte spezifische Trockenstoffmenge von 1 200 kg/t CSB ermittelt. Der Sauerstoffanteil, der in Verbindung mit Kohlenstoff als Kohlendioxid energieaufwendig "ausgeblasen" wird, liegt bei ca. 1 000 kg, und die daraus ermittelte Kohlenstoffmenge beträgt 375 kg/t CSB.

Bei einem Verfahren gemäß Anspruch 6 wird zur Steuerung das Produkt ENTEC PE100 (PE 100: Gemisch aus kationischem Polymer und Enzyminhibitor) zugegeben, welches einen hohen Anteil enzyminhibierender Substanzen enthält. Der Verbrauch beträgt 200 kg ENTEC PE100/t Kohlendioxid.

Durch diese Maßnahme läßt sich der Sauerstoffverbrauch pro Tonne CSB innerhalb von 48 Stunden auf 600 kg/t CSB verringern, der Sauerstoffanteil für die Kohlendioxidentwicklung vermindert sich auf 100 kg/t CSB und die Trockenstoffmenge beträgt 700 kg/t CSB.

## Patentansprüche

1. Verfahren zur Steuerung der Atmungsaktivität von Mikroorganismen in einem Fermentationsprozeß bei der Abwasserreinigung, insbesondere in einem Belebtschlammprozeß, dadurch gekennzeichnet, dass in Abhängigkeit von der Versorgungsmenge an Nährstoffen für die Mikroorganismen ein Teil der Versorgungsmenge den Mikroorganismen unzugängig gemacht wird, bzw. dem Abbau durch die Mikroorganismen entzogen wird, durch Zugabe von ad- und/oder absorptiv auf die Nährstoffe wirkende Stoffe.

2. Verfahren nach Anspruch 1, dadurch gekennzeichnet, dass die ad-und/oder absorptiv auf die Nährstoffe wirkende Stoffe ausgewählt sind aus der Gruppe, bestehend aus feinteiligen SiO₂-Derivaten, hydrophober und/oder hydrophiler Aktivkohle und Metallsalzen.

3. Verfahren nach einem der Ansprüche 1 oder 2, dadurch gekennzeichnet, dass zusätzlich Enzym-inhibierend wirkende Stoffe, ausgewählt aus organischen tertiären und quadronären Stickstoffverbindungen, mit Ausnahme von Cholinderivaten, zugegeben werden.

4. Verfahren nach einem der Ansprüche 1 bis 3, dadurch gekennzeichnet, daß an sich bekannte Polymere für die Ad- oder Absorption zugesetzt werden.

5. Verfahren nach einem oder mehreren der Ansprüche 1 bis 4, dadurch gekennzeichnet, dass zur Entwicklung einer bestimmten Biozönose eine bestimmte Bedingung für den Selektionsdruck durch Wahl eines bestimmten Verhältisses von zugeführter Sauerstoffmenge zu Mikroorganismenmenge und Nährstoffmenge im Bereich von 50 bis 2.000 kg pro Tonne chemischem Sauerstoffbedarf (CSB) eingehalten wird.

6. Verfahren nach einem oder mehreren der Ansprüche 1 bis 5, dadurch gekennzeichnet, dass zur Entwicklung einer bestimmten Biozönose eine bestimmte Bedingung für den Selektionsdruck durch Wahl eines bestimmten Verhältnisses von zugeführter Sauerstoffmenge zu entwickelter Kohlendioxidmenge und Nährstoffmenge im Bereich von 50 bis 2.000 kg pro Tonne chemischem Sauerstoffbedarf (CSB) eingehalten wird.
